# EUROPÄISCHE PATENTSCHRIFT

(11) **EP 3 914 468 B1**
(45) Veröffentlichungstag und Bekanntmachung des Hinweises auf die Patenterteilung: **23.08.2023**
(21) Anmeldenummer: 19832896.5
(22) Anmeldetag: 18.12.2019
(51) Int. Cl.: B60K 15/04, B60K 15/05, H01R 13/453

(54) **LADEANSCHLUSSEINRICHTUNG FÜR EIN FAHRZEUG**
CHARGING CONNECTION DEVICE FOR A VEHICLE
DISPOSITIF DE RACCORDEMENT DE CHARGE POUR UN VÉHICULE

(30) Priorität: 22.01.2019 DE 102019000462
(43) Veröffentlichungstag der Anmeldung: 01.12.2021
(73) Patentinhaber: Mercedes-Benz Group AG, 70372 Stuttgart (DE)
(72) Erfinder: SCHURZ, Andreas, 73101 Aichelberg (DE); BÖLD, Robin, 73033 Göppingen (DE)
(74) Vertreter: Novagraaf Group
(86) Internationale Anmeldenummer: PCT/EP2019/085929
(87) Internationale Veröffentlichungsnummer: WO 2020/151886

(56) Entgegenhaltungen:
- EP-A1- 0 115 644
- EP-A2- 0 630 074
- DE-A1- 19 832 910
- DE-A1-102015 100 136
- DE-C2- 19 832 910
- US-B2- 8 893 910

## Beschreibung

Die Erfindung betrifft eine Ladeanschlusseinrichtung für ein Fahrzeug, gemäß Anspruch 1.

Ladeanschlusseinrichtungen der hier angesprochenen Art, manchmal auch als Ladesteckdose, insbesondere HV-Ladesteckdose bezeichnet, müssen gegen Staub und Wasser abgedichtet sein, insbesondere nach IP67. Der kritische Bereich der Ladeanschlusseinrichtung sind die Steckkontakte, welche die Ladeanschlusseinrichtung aufweist. Bekannt ist es, entsprechende Klappen oder Stopfen vorzusehen, welche die Steckkontakte der Ladeanschlusseinrichtung sowohl vor als auch nach dem Ladevorgang abdecken. Insofern ist es notwendig, dass diese Klappen oder Stopfen entsprechend manuell vor dem Ladevorgang geöffnet beziehungsweise entfernt und nach dem Ladevorgang wieder geschlossen beziehungsweise wieder aufgesteckt werden müssen. Dies ist insbesondere in Bezug auf automatische Systeme problematisch.

Insbesondere bei motorisiert betätigten Außenklappen müssen bei einem Stecken beziehungsweise Einstecken eines Ladesteckers in die Ladeanschlusseinrichtung vorhandene Klappen oder Stopfen manuell bedient werden. Nachteilig hieran ist, dass bei einem durch einen Roboter durchgeführten Ladevorgang eine Klappe und insbesondere ein gegebenenfalls vorhandener Stopfen der Ladeanschlusseinrichtung nicht geschlossen beziehungsweise wieder aufgesteckt werden kann und somit die Steckkontakte ungeschützt bleiben.

Aus der DE 10 2017 201 365 A1 ist eine Ladeanschlusseinrichtung für ein Kraftfahrzeug bekannt, umfassend eine in einer Vertiefung angeordnete Anschlussdose mit einer mit dieser lösbar verbindbaren, schwenkbaren Abdeckung sowie eine die Vertiefung reversibel verschließende, schwenkbare Abdeckklappe, wobei die Abdeckung und die Abdeckklappe zwischen einer Schließstellung und einer Offenstellung verschwenkbar sind, wobei diese sich in der Offenstellung befindliche Abdeckung im Schwenkweg der mittels eines motorischen Stellmittels aus der Offenstellung in die Schließstellung schwenkbare Abdeckklappe angeordnet ist und während der Schwenkbewegung der Abdeckklappe von dieser zum Schließen mitgenommen wird. Dabei entstehen die zuvor genannten Probleme.

Aus der EP 0 115 644 A1 geht eine Vorrichtung zum Verschließen eines Einlasses eines Kraftfahrzeugtanks hervor. Der Einlass weist einen nachgiebigen Teil auf, der an einer Füllschale befestigt ist, die ihrerseits mit einer Klappe fest verbunden ist, die an der Karosserie des Fahrzeugs angelenkt ist.

Aus der DE 44 16 992 A1 und der EP 0 630 0074 A2 geht jeweils eine gattungsbildende Ladeanschlusseinrichtung hervor.

Der Erfindung liegt daher die Aufgabe zugrunde, eine Ladeanschlusseinrichtung für ein Fahrzeug sowie ein Fahrzeug zu schaffen, wobei die genannten Nachteile nicht auftreten.

Die Aufgabe wird gelöst, indem die Gegenstände der unabhängigen Ansprüche geschaffen werden. Vorteilhafte Ausgestaltungen ergeben sich aus den Unteransprüchen sowie den im Folgenden offenbarten Ausführungsbeispielen.

Die Aufgabe wird insbesondere gelöst, indem eine Ladeanschlusseinrichtung für ein Fahrzeug geschaffen wird, umfassend eine in einer Ausnehmung, beispielsweise einer Mulde oder einen von der Karosserieaußenseite her zugänglicher Aufnahmeraum angeordnete Anschlussdose sowie eine schwenkbar angeordnete Anschlussdosenabdeckklappe und eine verschwenkbar angeordnete Abdeckklappe. Es ist hierbei vorgesehen, dass die Anschlussdosenabdeckklappe sowie die Abdeckklappe jeweils in eine Offenstellung und jeweils in eine Geschlossenstellung verschwenkbar sind, wobei die Anschlussdosenabdeckklappe dazu eingerichtet ist, in der Geschlossenstellung die Anschlussdose abzudecken, insbesondere wasserdicht abzudecken, wobei die Abdeckklappe dazu angeordnet und eingerichtet ist, die Ausnehmung abzudecken, insbesondere wasserdicht abzudecken. Hierbei sind die Anschlussdosenabdeckklappe und die Abdeckklappe derart relativ zueinander angeordnet, dass wenn die Abdeckklappe und vorzugsweise die Anschlussdosenabdeckklappe aus der jeweiligen Offenstellung in die jeweilige Geschlossenstellung verlagert werden, die Abdeckklappe die Anschlussdosenabdeckklappe beim Schließen mitnimmt, das heißt die Anschlussdosenabdeckklappe durch das Schließen der Abdeckklappe ebenfalls geschlossen wird. Ferner weist die Anschlussdosenabdeckklappe ein erstes Element einer Anschlussdosen-Verbindungseinrichtung und die Anschlussdose oder die Ausnehmung ein zweites Element der Anschlussdosen-Verbindungseinrichtung auf, wobei sich vorzugsweise das erste Element und das zweite Element in einer Geschlossenstellung der Anschlussdosenabdeckklappe gegenüberliegen. Das erste Element und das zweite Element der Anschlussdosen-Verbindungseinrichtung sind derart zueinander angeordnet und eingerichtet, dass in der Geschlossenstellung der Anschlussdosenabdeckklappe die Anschlussdosenabdeckklappe durch die Anschlussdosen-Verbindungseinrichtung magnetisch lösbar gehalten, insbesondere fixiert, wird. Durch die magnetische Fixierung der Anschlussdosenabdeckklappe wird insbesondere erreicht, dass auf einfache Art und Weise ein dichter Verschluss, insbesondere wasserdichter Verschluss der Anschlussdose erzielt wird, wobei dieser auch reproduzierbar und zuverlässig - ohne Verschleiß - wieder geöffnet werden kann. Steckkontakte, welche in der Anschlussdose angeordnet sind, sind somit in der Geschlossenstellung geschützt und in der Offenstellung einfach zugänglich. Insbesondere wir der Vorteil erzielt, dass bei einem automatischen Schließen der Abdeckklappe die Anschlussdosenabdeckklappe ebenfalls geschlossen und durch die Anschlussdosen-Verbindungseinrichtung magnetisch in der Geschlossenstellung gehalten wird. Mit anderen Worten die Steckkontakte geschützt sind.

Weiterhin ist vorgesehen, dass die Abdeckklappe ein drittes Element der Anschlussdosen-Verbindungseinrichtung aufweist, wobei das dritte Element der Abdeckklappe und das erste Element der Anschlussdosenabdeckklappe derart zueinander angeordnet und eingerichtet sind, dass in der Offenstellung der Anschlussdosenabdeckklappe und der Abdeckklappe die Anschlussdosenabdeckklappe durch die Anschlussdosen-Verbindungseinrichtung magnetisch lösbar an der Abdeckklappe gehalten, insbesondere fixiert, wird. Dies hat insbesondere den Vorteil, dass die Anschlussdosenabdeckklappe an der Abdeckklappe magnetisch gehalten wird, sodass auf einfache Art und Weise erreicht wird, dass die Anschlussdosenabdeckklappe während eines Ladevorgangs nicht stört.

Gemäß einer Weiterbildung der Erfindung ist vorgesehen, dass eine der folgenden Kombinationen ausgewählt wird:
a) wenn das erste Element aus einem magnetischen Material besteht, besteht das zweite Element aus einem metallischen oder einem entsprechend zum magnetischen Material des ersten Elements invers gepolten magnetischen Material, und optional das optionale dritte Element aus einem metallischen Material oder einem entsprechend zum magnetischen Material des ersten Elements invers gepolten magnetischen Material, oder
b) wenn das erste Element aus einem metallischen Material besteht, besteht das zweite Element aus einem magnetischen Material, und optional auch das optionale dritte Element aus einem magnetischen Material.

Hierdurch wird auf einfache Art und Weise ein magnetisches Halten, insbesondere Fixieren, erzielt.

Gemäß einer Weiterbildung der Erfindung ist vorgesehen, dass die Anschlussdosenabdeckklappe auf einer der Anschlussdose in einer Geschlossenstellung zugewandten Seite eine Abdichtvorrichtung aufweist, welche vorzugsweise Gummi aufweist oder aus Gummi besteht. Dieses Ausführungsbeispiel hat den Vorteil, dass auf einfache Art und Weise eine Abdeckung, insbesondere wasserdichte Abdeckung, verwirklicht werden kann.

Gemäß einer Weiterbildung der Erfindung ist vorgesehen, dass die Abdeckklappe motorisch, insbesondere elektromotorisch und/oder pneumatisch und/oder hydraulisch, verlagerbar ausgebildet ist. Hierdurch ist ein automatisches Öffnen oder Schließen der Abdeckklappe erzielbar.

Gemäß einer Weiterbildung der Erfindung ist vorgesehen, dass die Anschlussdosenabdeckklappe motorisch, insbesondere elektromotorisch und/oder pneumatisch und/oder hydraulisch, verlagerbar ausgebildet ist. Dies hat insbesondere den Vorteil, dass auf einfache Art und Weise die Anschlussdosenabdeckklappe automatisch betätigbar ist.

Gemäß einer Weiterbildung der Erfindung ist vorgesehen, dass die Anschlussdosenabdeckklappe und die Abdeckklappe an dem die Ausnehmung definierenden Bauteil schwenkbar angeordnet sind.

Gemäß einer Weiterbildung der Erfindung ist vorgesehen, dass in der Ladeanschlusseinrichtung ein magnetisches Material durch einen entsprechend ansteuerbaren, das heißt vorgebbar ansteuerbaren, Elektromagnet ausgeführt oder ausgebildet ist.

Die Aufgabe wird auch gelöst, indem ein Fahrzeug geschaffen wird, umfassend eine Ladeanschlusseinrichtung gemäß der vorliegenden Erfindung. In Zusammenhang mit dem Fahrzeug ergeben sich insbesondere die Vorteile, die bereits in Zusammenhang mit der Ladeanschlusseinrichtung erläutert wurden.

Gemäß einer Weiterbildung der Erfindung ist vorgesehen, dass die Ladeanschlusseinrichtung im Bereich einer Außenseite, manchmal auch als Außenkontur oder Außenhaut bezeichnet, des Fahrzeugs angeordnet ist. Dies hat insbesondere den Vorteil, dass auf einfache Art und Weise eine Zugänglichkeit zur Anschlussdose möglich ist, vorzugsweise auch ohne, dass das Fahrzeug hierzu geöffnet sein muss.

Die Erfindung wird im Folgenden anhand der Zeichnung näher erläutert. Dabei zeigen:
- Fig. 1: ein erstes Ausführungsbeispiel der Ladeanschlusseinrichtung, wobei die Anschlussdosenabdeckklappe sowie die Abdeckklappe sich in der Geschlossenstellung befinden,
- Fig. 2: das Ausführungsbeispiel der Ladeanschlusseinrichtung gemäß Figur 1, wobei die Abdeckklappe sich in einer Offenstellung und die Anschlussdosenabdeckklappe in einer Geschlossenstellung befindet,
- Fig. 3: das Ausführungsbeispiel der Ladeanschlusseinrichtung gemäß den Figuren 1 und 2, wobei die Anschlussdosenabdeckklappe sowie die Abdeckklappe sich in einer Offenstellung befinden,
- Fig. 4: das Ausführungsbeispiel der Ladeanschlusseinrichtung gemäß den Figuren 1 bis 3, wobei die Anschlussdosenabdeckklappe sowie die Abdeckklappe jeweils in die Geschlossenstellung verschwenkt werden.

Gleiche Bezugszeichen bezeichnen in allen Figuren gleiche oder funktionsgleiche Teile.

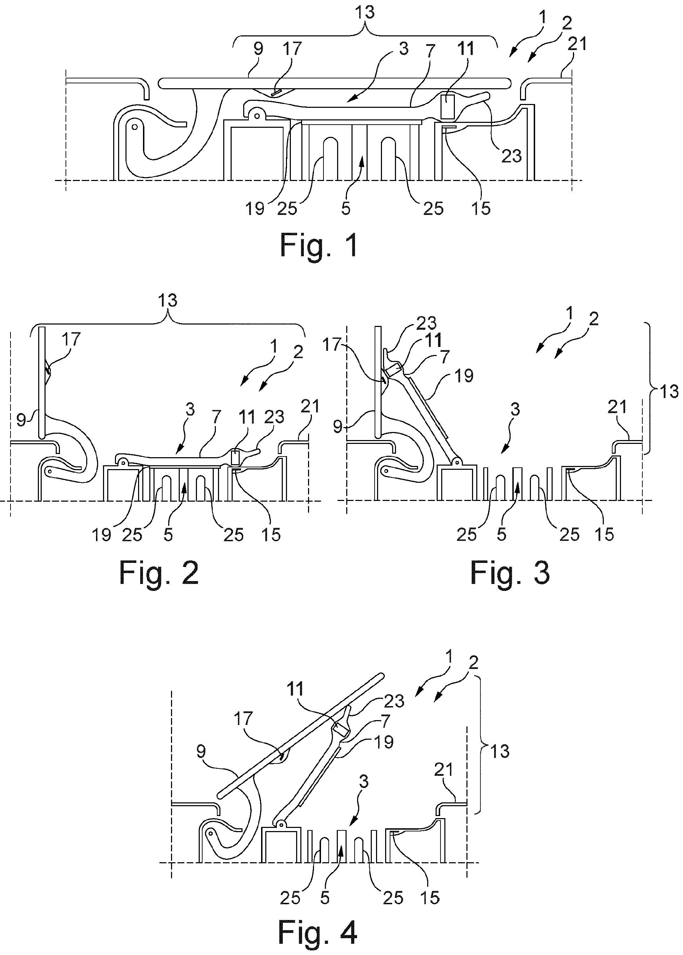

Figur 1 und 2 zeigen eine Ladeanschlusseinrichtung 1 für ein Fahrzeug 2, von dem hier lediglich ein kleiner Teil einer auch als Außenhaut bezeichneten Außenseite 21 gezeigt ist. Die Ladeanschlusseinrichtung 1 umfasst eine in einer von der Fahrzeugaußenseite 21 her über eine Öffnung in der Karosserieaußenwand zugängliche Ausnehmung 3 angeordnete Anschlussdose 5 sowie eine verschwenkbar angeordnete Anschlussdosenabdeckklappe 7 und eine verschwenkbar angeordnete Abdeckklappe 9. Die Anschlussdosenabdeckklappe 7 sowie die Abdeckklappe 9 sind jeweils in eine Offenstellung und jeweils in eine Geschlossenstellung verschwenkbar. Dabei ist die Anschlussdosenabdeckklappe 7 dazu eingerichtet, in der Geschlossenstellung die Anschlussdose 5 abzudecken, insbesondere wasserdicht abzudecken. Des Weiteren ist die Abdeckklappe 9 so angeordnet und eingerichtet, um die Ausnehmung 3 abzudecken, insbesondere wasserdicht abzudecken,

Die Anschlussdosenabdeckklappe 7 und die Abdeckklappe 9 sind derart relativ zueinander angeordnet, dass wenn die Anschlussdosenabdeckklappe 7 sowie die Abdeckklappe 9 aus der jeweiligen Offenstellung in die jeweilige Geschlossenstellung verlagert werden, die Abdeckklappe 9 die Anschlussdosenabdeckklappe 7 beim Schließen mitnimmt, das heißt die Anschlussdosenabdeckklappe 7 durch das Schließen der Abdeckklappe 9 ebenfalls geschlossen wird,

Die Anschlussdosenabdeckklappe 7 weist ein erstes Element 11 einer Anschlussdosen-Verbindungseinrichtung 13 und die Anschlussdose 5 oder die Ausnehmung 3 ein zweites Element 15 der Anschlussdosen-Verbindungseinrichtung 13 auf, wobei sich das erste Element 11 und das zweite Element 15 in einer Geschlossenstellung der Anschlussdosenabdeckklappe gegenüberliegen und wobei das erste Element 11 und das zweite Element 15 der Anschlussdosen-Verbindungseinrichtung 13 derart zueinander angeordnet und eingerichtet sind, dass in der Geschlossenstellung der Anschlussdosenabdeckklappe 7 die Anschlussdosenabdeckklappe 7 durch die Anschlussdosen-Verbindungseinrichtunng 13 magnetisch lösbar gehalten, insbesondere fixiert, wird.

Hierbei ist es bevorzugt vorgesehen, dass durch die magnetische Kraft der Anschlussdosen-Verbindungseinrichtunng 13, insbesondere der magnetischen Kraft zwischen dem ersten Element 11 und dem zweiten Element 15 der Anschlussdosen-Verbindungseinrichtunng 13, die Anschlussdosenabdeckklappe 7 in die Geschlossenstellung gezogen wird, wenn sich die Anschlussdosenabdeckklappe 7 einer Endposition der Geschlossenstellung nähert.

In Figur 3 ist gezeigt, dass die Abdeckklappe 9 ein drittes Element 17 der Anschlussdosen-Verbindungseinrichtung 13 aufweist, wobei das dritte Element 17 der Abdeckklappe 9 und das erste Element 11 der Anschlussdosenabdeckklappe 7 derart zueinander angeordnet und eingerichtet sind, dass in der Offenstellung der Anschlussdosenabdeckklappe 7 - wie es Figur 3 zeigt - und der Abdeckklappe 9 die Anschlussdosenabdeckklappe 7 durch die Anschlussdosen-Verbindungseinrichtung 13 magnetisch lösbar an der Abdeckklappe 9 gehalten, insbesondere fixiert, wird.

Ferner ist bevorzugt vorgesehen, dass eine der folgenden Kombinationen ausgewählt wird:
a) wenn das erste Element 11 aus einem magnetischen Material besteht, besteht das zweite Element 15 aus einem metallischen oder einem entsprechend zum magnetischen Material des ersten Elements 11 invers gepolten magnetischen Material, und optional das optionale dritte Element aus einem metallischen Material oder einem entsprechend zum magnetischen Material des ersten Elements 11 invers gepolten magnetischen Material, oder
b) wenn das erste Element 11 aus einem metallischen Material besteht, besteht das zweite Element 15 aus einem magnetischen Material, und optional auch das optionale dritte Element 17 aus einem magnetischen Material.

Ferner ist insbesondere den Figuren 1 und 2 zu entnehmen, dass die Anschlussdosenabdeckklappe 7 auf eine der Anschlussdose 5 in einer Geschlossenstellung zugewandten Seite eine Abdichtvorrichtung 19 zur flüssigkeitsdichten Abdichtung der Anschlussdose 5 aufweist, welche vorzugsweise Gummi oder dergleichen aufweist oder aus Gummi besteht.

Ferner ist bevorzugt vorgesehen, dass die Abdeckklappe 9 motorisch, insbesondere elektromotorisch und/oder pneumatisch und/oder hydraulisch, verlagerbar ausgebildet ist.

Ferner ist bevorzugt vorgesehen, dass die Anschlussdosenabdeckklappe 7 motorisch, insbesondere elektromotorisch und/oder pneumatisch und/oder hydraulisch, verlagerbar ausgebildet ist.

Ferner ist den Figuren zu entnehmen, dass die Anschlussdosenabdeckklappe 7 und die Abdeckklappe 9 an dem die Ausnehmung 3 definierenden Bauteil schwenkbar angeordnet sind. Dabei sind deren jeweilige Schwenkachse parallel zueinander ausgerichtet. Das jeweilige Schwenklager oder Gelenk zur schwenkbaren Verlagerung der Anschlussdosenabdeckklappe 7 beziehungsweise Abdeckklappe 9 ist lagefest an der Fahrzeugkarosserie angeordnet.

Den Figuren ist - wie oben schon einmal erwähnt - zu entnehmen, dass die Ladeanschlusseinrichtung 1 im Bereich der Fahrzeugaußenseite 21 angeordnet ist, wobei die Anschlussdose 5 gegenüber der Karosserieaußenhaut nach innen hin versetzt angeordnet und über eine Ausnehmung in der Karosserieaußenhaut von außen her zugänglich ist, sofern die Abdeckklappe 9 in ihrer in den Figuren 2 und 3 gezeigten Offenstellung angeordnet ist.

Insbesondere ist der Figur 3 zu entnehmen, dass bei einer geöffneten Abdeckklappe 9 die innere Anschlussdosenabdeckklappe 7 gegen einen magnetischen Widerstand der Anschlussdosen-Verbindungseinrichtung 13 einfach an einem Griff 23, welcher an der Anschlussdosenabdeckklappe 7 angeordnet ist, geöffnet und gegen die Abdeckklappe 9 angeschlagen werden kann, sodass mittels der Anschlussdosen-Verbindungseinrichtung 13 ein magnetisches Halten realisiert wird.

Ferner ist allen Figuren zu entnehmen, dass in der Anschlussdose 5 jeweils zwei Steckkontakte 25 angeordnet sind.

## Patentansprüche

1. Ladeanschlusseinrichtung (1) für ein Fahrzeug (2), umfassend eine in einer Ausnehmung (3) angeordnete Anschlussdose (5) sowie eine verschwenkbar angeordnete Anschlussdosenabdeckklappe (7) und eine verschwenkbar angeordnete Abdeckklappe (9),
- wobei die Anschlussdosenabdeckklappe (7) sowie die Abdeckklappe (9) jeweils in eine Offenstellung und jeweils in eine Geschlossenstellung schwenkbar sind,
- wobei die Anschlussdosenabdeckklappe (7) dazu eingerichtet ist in der Geschlossenstellung die Anschlussdose (5) abzudecken,
- wobei die Abdeckklappe (9) dazu angeordnet und eingerichtet ist die Ausnehmung (3) abzudecken, und
- wobei die Anschlussdosenabdeckklappe (7) und die Abdeckklappe (9) derart relativ zueinander angeordnet sind, dass wenn die Abdeckklappe (9) aus der jeweiligen Offenstellung in die jeweilige Geschlossenstellung verlagert wird, die Abdeckklappe (9) die Anschlussdosenabdeckklappe (7) beim Schließen mitnimmt,
**dadurch gekennzeichnet, dass**
- die Anschlussdosenabdeckklappe (7) ein erstes Element (11) einer Anschlussdosen-Verbindungseinrichtung (13) und die Anschlussdose (5) oder die Ausnehmung (3) ein zweites Element (15) der Anschlussdosen-Verbindungseinrichtung (13) aufweist,
- dass das erste Element (11) und das zweite Element (15) der Anschlussdosen-Verbindungseinrichtung (13) derart zueinander angeordnet und eingerichtet sind, dass in der Geschlossenstellung der Anschlussdosenabdeckklappe (7) die Anschlussdosenabdeckklappe (7) durch die Anschlussdosen-Verbindungseinrichtung (13) magnetisch lösbar gehalten wird, und
- dass die Abdeckklappe (9) ein drittes Element (17) der Anschlussdosen-Verbindungseinrichtung (13) aufweist, wobei das dritte Element (17) der Abdeckklappe (9) und das erste Element (11) der Anschlussdosenabdeckklappe (7) derart zueinander angeordnet und eingerichtet sind, dass in der Offenstellung der Anschlussdosenabdeckklappe (7) und der Abdeckklappe (9) die Anschlussdosenabdeckklappe (7) durch die Anschlussdosen-Verbindungseinrichtung (13) magnetisch lösbar an der Abdeckklappe (9) gehalten wird.

2. Ladeanschlusseinrichtung nach Anspruch 1,
**dadurch gekennzeichnet, dass**
eine der folgenden Kombinationen ausgewählt wird:
a) wenn das erste Element (11) aus einem magnetischen Material besteht, besteht das zweite Element (15) aus einem metallischen oder einem entsprechend zum magnetischen Material des ersten Elements (11) invers gepolten magnetischen Material, und optional das optionale dritte Element (17) aus einem metallischen Material oder einem entsprechend zum magnetischen Material des ersten Elements (11) invers gepolten magnetischen Material, oder
b) wenn das erste Element (11) aus einem metallischen Material besteht, besteht das zweite Element (15) aus einem magnetischen Material, und optional auch das optionale dritte Element (17) aus einem magnetischen Material.

3. Ladeanschlusseinrichtung nach einem der vorhergehenden Ansprüche,
**dadurch gekennzeichnet, dass**
die Anschlussdosenabdeckklappe (7) auf einer der Anschlussdose (5) in einer Geschlossenstellung zugewandten Seite eine Abdichtvorrichtung (19) aufweist, welche vorzugsweise Gummi aufweist oder aus Gummi besteht.

4. Ladeanschlusseinrichtung nach einem der vorhergehenden Ansprüche,
**dadurch gekennzeichnet, dass**
die Abdeckklappe (9) motorisch und/oder pneumatisch und/oder hydraulisch, verlagerbar ausgebildet ist.

5. Ladeanschlusseinrichtung nach Anspruch 4,
**dadurch gekennzeichnet, dass**
die Anschlussdosenabdeckklappe (7) und die Abdeckklappe (9) an dem die Ausnehmung (3) definierenden Bauteil schwenkbar angeordnet sind.

6. Fahrzeug (2), umfassend eine Ladeanschlusseinrichtung (1) nach einem der vorhergehenden Ansprüche.

7. Fahrzeug nach Anspruch 6,
**dadurch gekennzeichnet, dass**
die Ladeanschlusseinrichtung (1) im Bereich einer Außenseite (21) des Fahrzeugs (2) angeordnet ist.

## Claims

1. A charging connection apparatus (1) for a vehicle (2), comprising a junction box (5) arranged in a recess (3) and a pivotally arranged junction box cover flap (7) and a pivotally arranged cover flap (9),
- wherein the junction box cover flap (7) and the cover flap (9) can each be pivoted into an open position and into a closed position,
- wherein the junction box cover flap (7) is designed to cover the junction box (5) in the closed position,
- wherein the cover flap (9) is arranged and designed to cover the recess (3), and
- wherein the junction box cover flap (7) and the cover flap (9) are arranged relative to one another in such a manner that when the cover flap (9) is displaced from the relevant open position into the relevant closed position, the cover flap (9) entrains the junction box cover flap (7) during closing,
**characterized in that**
- the junction box cover flap (7) has a first element (11) of a junction box connection apparatus (13) and the junction box (5) or the recess (3) has a second element (15) of the junction box connection apparatus (13),
- **in that** the first element (11) and the second element (15) of the junction box connection apparatus (13) are arranged with respect to one another and designed in such a manner that, in the closed position of the junction box cover flap (7), the junction box cover flap (7) is magnetically releasably held by the junction box connection apparatus (13), and
- **in that** the cover flap (9) has a third element (17) of the junction box connection apparatus (13), wherein the third element (17) of the cover flap (9) and the first element (11) of the junction box cover flap (7) are arranged with respect to one another and designed in such a manner that, in the open position of the junction box cover flap (7) and the cover flap (9), the junction box cover flap (7) is magnetically releasably held on the cover flap (9) by the junction box connection apparatus (13).

2. The charging connection apparatus according to claim 1,
**characterized in that**
one of the following combinations is selected:
a) if the first element (11) is made of a magnetic material, the second element (15) is made of a metal material or a magnetic material of inverse polarity corresponding to the magnetic material of the first element (11), and optionally the optional third element (17) is made of a metal material or a magnetic material of inverse polarity corresponding to the magnetic material of the first element (11), or
b) if the first element (11) is made of a metal material, the second element (15) is made of a magnetic material, and optionally the optional third element (17) is also made of a magnetic material.

3. The charging connection apparatus according to either of the preceding claims,
**characterized in that**
the junction box cover flap (7) has, on a side facing the junction box (5) in a closed position, a sealing device (19) which preferably has rubber or is made of rubber.

4. The charging connection apparatus according to any of the preceding claims,
**characterized in that**
the cover flap (9) is designed to be displaceable by motor and/or pneumatically and/or hydraulically.

5. The charging connection apparatus according to claim 4,
**characterized in that**
the junction box cover flap (7) and the cover flap (9) are pivotably arranged on the component defining the recess (3).

6. A vehicle (2) comprising a charging connection apparatus (1) according to any of the preceding claims.

7. The vehicle according to claim 6,
**characterized in that**
the charging connection apparatus (1) is arranged in the region of an outer side (21) of the vehicle (2).

## Revendications

1. Dispositif de raccordement de charge (1) pour un véhicule (2), comprenant une prise de raccordement (5) disposée dans une cavité (3) ainsi qu'un clapet de recouvrement de prise de raccordement (7) disposé de manière à pouvoir pivoter et un clapet de recouvrement (9) disposé de manière à pouvoir pivoter,
- dans lequel le clapet de recouvrement de prise de raccordement (7) ainsi que le clapet de recouvrement (9) peuvent être pivotés respectivement dans une position ouverte et respectivement dans une position fermée,
- dans lequel le clapet de recouvrement de prise de raccordement (7) est conçu pour recouvrir la prise de raccordement (5) dans la position fermée,
- dans lequel le clapet de recouvrement (9) est disposé et conçu pour recouvrir la cavité (3), et
- dans lequel le clapet de recouvrement de prise de raccordement (7) et le clapet de recouvrement (9) sont disposés l'un par rapport à l'autre de telle façon que, lorsque le clapet de recouvrement (9) est déplacé de la position ouverte respective vers la position fermée respective, le clapet de recouvrement (9) entraîne le clapet de recouvrement de prise de raccordement (7) lors de la fermeture,
**caractérisé en ce que**
- le clapet de recouvrement de prise de raccordement (7) présente un premier élément (11) d'un dispositif de liaison de prise de raccordement (13) et la prise de raccordement (5) ou la cavité (3) présente un deuxième élément (15) du dispositif de liaison de prise de raccordement (13),
- **en ce que** le premier élément (11) et le deuxième élément (15) du dispositif de liaison de prise de raccordement (13) sont disposés l'un par rapport à l'autre et conçus de telle façon que, dans la position fermée du clapet de recouvrement de prise de raccordement (7), le clapet de recouvrement de prise de raccordement (7) est maintenu magnétiquement de manière amovible par le dispositif de liaison de prise de raccordement (13), et
- **en ce que** le clapet de recouvrement (9) présente un troisième élément (17) du dispositif de liaison de prise de raccordement (13), dans lequel le troisième élément (17) du clapet de recouvrement (9) et le premier élément (11) du clapet de recouvrement de prise de raccordement (7) sont disposés l'un par rapport à l'autre et conçus de telle façon que, dans la position ouverte du clapet de recouvrement de prise de raccordement (7) et du clapet de recouvrement (9), le clapet de recouvrement de prise de raccordement (7) est maintenu magnétiquement de manière amovible sur le clapet de recouvrement (9) par le dispositif de liaison de prise de raccordement (13).

2. Dispositif de raccordement de charge selon la revendication 1,
**caractérisé en ce que**
l'une des combinaisons suivantes est choisie :
a) lorsque le premier élément (11) est constitué d'un matériau magnétique, le deuxième élément (15) est constitué d'un matériau métallique ou d'un matériau magnétique à polarité inversée par rapport à celle du matériau magnétique du premier élément (11), et éventuellement le troisième élément (17) optionnel est constitué d'un matériau métallique ou d'un matériau magnétique à polarité inversée par rapport à celle du matériau magnétique du premier élément (11), ou
b) lorsque le premier élément (11) est constitué d'un matériau métallique, le deuxième élément (15) est constitué d'un matériau magnétique, et éventuellement le troisième élément (17) optionnel est aussi constitué d'un matériau magnétique.

3. Dispositif de raccordement de charge selon l'une des revendications précédentes,
**caractérisé en ce que**
le clapet de recouvrement de prise de raccordement (7) présente, sur un côté faisant face à la prise de raccordement (5) dans une position fermée, un dispositif d'étanchéité (19) qui présente de préférence du caoutchouc ou est constitué de caoutchouc.

4. Dispositif de raccordement de charge selon l'une quelconque des revendications précédentes,
**caractérisé en ce que**
le clapet de recouvrement (9) est réalisé de manière à pouvoir être déplacé de manière motorisée et/ou de manière pneumatique
et/ou de manière hydraulique.

5. Dispositif de raccordement de charge selon la revendication 4,
**caractérisé en ce que**
le clapet de recouvrement de prise de raccordement (7) et le clapet de recouvrement (9) sont disposés de manière à pouvoir pivoter sur le composant définissant la cavité (3).

6. Véhicule (2), comprenant un dispositif de raccordement de charge (1) selon l'une quelconque des revendications précédentes.

7. Véhicule selon la revendication 6,
**caractérisé en ce que**
le dispositif de raccordement de charge (1) est disposé dans la zone d'un côté extérieur (21) du véhicule (2).
